# EUROPEAN PATENT SPECIFICATION

(11) **EP 4 091 802 B1**
(45) Date of publication and mention of the grant of the patent: **28.01.2026**
(21) Application number: 21174154.1
(22) Date of filing: 17.05.2021
(51) Int. Cl.: B29C 70/44, B29C 70/54, B29L 31/08

(54) **DRY SPOT TOOL FOR CREATING A DRY SPOT IN A COMPOSITE PART**
TROCKENPUNKTWERKZEUG ZUR ERZEUGUNG EINES TROCKENPUNKTS IN EINEM VERBUNDTEIL
OUTIL DE ZONE SÈCHE POUR LA CRÉATION D'UNE ZONE SÈCHE DANS UNE PIÈCE COMPOSITE

(43) Date of publication of application: 23.11.2022
(73) Proprietor: Siemens Gamesa Renewable Energy A/S, 7330 Brande (DK)
(72) Inventor: Knudsen, Klaus Christian, 9280 Storvorde (DK); Pedersen, Dan, 9490 Pandrup (DK); Tams, Morten, 9270 Klarup (DK)
(74) Representative: SGRE-Association

(56) References cited:
- EP-A1- 2 871 047
- CN-A- 107 576 219
- US-A1- 2012 292 408

## Description

The invention relates to a dry spot tool for creating a dry spot in a composite material of a wind turbine during vacuum assisted resin transfer molding, a dry spot arrangement comprising the dry spot tool and a vacuum system and a method for manufacturing a composite part with a dry spot by means of vacuum assisted resin transfer molding using the dry spot arrangement.

EP2871047 A1 discloses a method of forming a wind turbine component, the method including forming a segment by impregnating a portion of a fiber reinforcement with a thermoset resin up to a boundary , curing the thermoset resin, and leaving unimpregnated fiber reinforcement extending from the boundary. The component may then be assembled by impregnating and joining the unimpregnated fiber reinforcement of two such segments.

In geometrically complex and large composite parts, such as rotor blades of wind turbines, which are manufactured by a liquid composite molding process, formation of unintended dry spots resulting from macroscopic gas entrapments during the manufacturing process may occur. The formation of one or several dry spots in the composite part is a problem because it may lead to scrap parts.

It is desirable to gain control of the formation of dry spots in the manufacturing process of composite parts. Thereby, it would be possible to analyze the phenomenon of the macroscopic gas entrapments more thoroughly, eventually leading to a better understanding of the formation of the dry spots, in particular in specific composite structures and geometries, and avoidance during appropriate setup and control of the manufacturing process.

Moreover, the inventors have found that an intended and controlled dry spot formation, in particular with respect to size and location of the dry spot, may provide advantageous composite parts, in which the dry spots may fulfil certain functions of the unit, for example a wind turbine, in which the manufactured composite part is later used.

Accordingly, it is an object of the invention to enable a controlled creation of dry spots in a composite part during vacuum assisted resin transfer molding, which should be simple and inexpensive.

This object is solved by the subject-matter of the claims. In particular, the object is solved by a dry spot tool according to claim 1, a dry spot arrangement according to claim 9 and a method for manufacturing a composite part with a dry spot by means of vacuum assisted resin transfer molding using the dry spot arrangement according to claim 14. Further details of the invention unfold from the other claims as well as the description and the drawings. Thereby, the features and details described in connection with the dry spot tool of the invention, the dry spot arrangement of the invention and the method of the invention apply in connection with each other so that regarding the disclosure of the individual aspects of the invention, it is or can be referred to one another.

According to a first aspect of the invention, the above object is solved by a dry spot tool for creating a dry spot in a composite part of a wind turbine during vacuum assisted resin transfer molding. The dry spot tool has a tool body. The tool body comprises a perimeter. The tool body extends along the perimeter and has an opening in the center of the perimeter for creating the dry spot in an area of the opening. The tool body further has a top side and a bottom side. The top side is opposite of the bottom side and the bottom side has at least one bottom surface. The tool body also has outlets. The outlets are fluidically connected to inlets of the dry spot tool. The inlets are configured for connecting hoses of a vacuum system thereto. Further, the tool body comprises a flow passage. The flow passage fluidically connects the outlets with one another. Also, the flow passage extends at least for a partial length thereof along the perimeter of the tool body. Moreover, the flow passage extends at least for a partial length thereof in width from the outlets to the bottom side.

The usage of the dry spot tool allows the creation of dry spots in the composite part during the manufacturing process of vacuum assisted resin transfer molding. This may be done by placing the dry spot tool on top of a reinforcement material, in particular fiber material and having multiple layers, which may be placed on top of a mold or draped onto the mold. A seal cover may afterwards be placed on both, the reinforcement material and the dry spot tool. The dry spot tool may then be attached to the vacuum system. Then, the space between the mold and the seal cover may be supplied with liquid matrix material, in particular resin, by means of applying a vacuum for infusing the reinforcement material with the liquid matrix material as generally known in the state of the art. During this process, which in the art is generally referred to as vacuum assisted resin transfer molding, vacuum may be supplied to the dry spot tool by means of the vacuum system. This vacuum provides for firm attachment of the dry spot tool to the reinforcement material. More particularly, a vacuum is created inside of the flow passage connected via the outlets to the inlets connected to the vacuum system. The bottom side of the dry spot tool with the vacuum inside the flow passage accordingly may press against the mold having the reinforcement material in between and attach with its at least one bottom surface to the reinforcement material and mold. The tool body thereby prevents the liquid matrix material from flowing from outside of the dry spot tool into the inside of the dry spot tool defined by its opening during the vacuum assisted infusion process. After the infusion process has finished, the area outside of the dry spot tool is soaked or wetted with the liquid matrix material and may cure. However, the area inside of the opening of the dry spot tool has remained dry during the manufacturing process, thereby resulting in the dry spot. The use of the dry spot tool will be described later in more detail with reference to the manufacturing method making use of the dry spot tool.

The dry spot tool thereby allows for a particular simple and inexpensive method of creating a dry spot in a controlled manner. The dry spot tool may essentially create the dry spot at any location of the composite material and in any size. For adjusting the location of the dry spot, the dry spot tool may essentially be placed on any area of the matrix reinforcement material or mold. For adjusting the size of the dry spot to be created, the opening or overall dry spot tool may be dimensioned according to the desired dry spot size.

The dry spot tool is not limited to flat or planar geometries of the mold or composite part to be manufactured but may be adjusted in the shape of its tool body to correspond to the geometry of the mold or composite part at the location at which the dry spot is to be created. For example, the tool body, in particular its bottom side, may be curved or have one or multiple edges. For example, if the composite part to be manufactured is a rotor blade of a wind turbine and the dry spot is to be created on the leading edge of the rotor blade, the tool body may be designed with its geometry corresponding to the geometry of the leading edge at the location in which the dry spot is to be created in the rotor blade made from the composite material.

The tool body or the entire dry spot tool may be designed monolithically or, in other words, from a single piece of material. It is preferable that the dry spot tool is made from plastic, which is particularly inexpensive. Preferably, the tool body or the entire dry spot tool may be manufactured by an additive manufacturing process, which allows to manufacture the dry spot tool with great freedom with respect to its geometry and inexpensively provide different dry spot tools for different places of dry spots to be created on geometrically complex composite parts.

The at least one bottom surface on the bottom side of the tool body may be a substantially smooth surface. Thereby, it may be prevented that gaps occur between the reinforcement material and the tool body, which might allow the liquid matrix material to enter the inside of the dry spot tool, eventually resulting in an undesired infusion of the area inside of the dry spot tool, where the dry spot shall be created.

A particular preferable application of the dry spot tool is in manufacturing processes of composite parts of wind turbines, such as rotor blades, for example, as these are comparatively large, may have complex geometry and are therefore difficult to manufacture. Also, the dry spot in the composite parts of wind turbines may fulfill different functions associated with the wind turbine, as will be explained in more detail later on. However, the dry spot tool may be used for other composite parts than from wind turbines as well and the dry spot tool and its associated method for manufacturing a composite part with a dry spot are not limited to composite parts of wind turbines. The composite part may alternatively be of any other structure, such as, for example, a car, an airplane, or similar.

The flow passage may substantially extend along the entire perimeter of the tool body. Substantially herein means that the flow passage extends along the entire or nearly the entire perimeter, in particular along at least 95 % of the perimeter, of the tool body. When the flow passage substantially extends along the entire perimeter of the tool body, the vacuum generated inside of the flow passage may completely or nearly completely attach the tool body to the reinforcement material on which it may be placed. Thereby, it may be prevented that a gap between the tool body and reinforcement material allows liquid matrix material to flow from outside of the dry spot tool into the inside or opening thereof, which would result in undesired infusion of the area inside of the dry spot tool.

The flow passage may extend substantially along its entire length in width from the outlets to the bottom side. Substantially herein means that the flow passage extends along its entire length or nearly its entire length in width from the outlets to the bottom side, in particular along at least 95 % of its length. When the flow passage substantially extends along its entire length in width from the outlets to the bottom side, the vacuum generated inside of the flow passage may completely or nearly completely attach the tool body to the reinforcement material on which it may be placed. Thereby, it may be prevented that a gap between the tool body and reinforcement material allows liquid matrix material to flow from outside of the dry spot tool into the inside or opening thereof, which would result in undesired infusion of the area inside of the dry spot tool.

The flow passage may extend from an inside of the tool body, in which the outlets are located, to the bottom side. For example, the flow passage may be designed as a cavity or groove inside of the tool body. The cavity or groove may be open towards or at the bottom side such that the flow passage extends in width to the bottom side. The width or, in other words, diameter of the dry spot tool is understood as the extension of the flow passage perpendicular to its length or, in other words, longitudinal extension.

The bottom side may have two bottom surfaces separated from one another by means of the flow passage located in between the two bottom surfaces. In particular, the two bottom surfaces may be part of two separate walls of the tool body, in between which the flow passage, in particular cavity or groove, extends. The two bottom surfaces may share one common level or plane. In the manufacturing process, the flow passage with its open side is being (nearly) closed by sucking onto the mold or reinforcement material functioning as a closure, whereas the two bottom surfaces attach to the mold or reinforcement material effectively shutting off the flow passage from the outside of the dry spot tool and the inside or opening of the dry spot tool. The two bottom surfaces very effectively prevent the liquid matrix material flowing outside of the dry spot tool from flowing into the opening of the dry spot tool, because there are two walls which would need to be passed by the liquid matrix material to get into the area of the dry spot to be created.

Each one of the inlets may be respectively fluidically connected to one of the outlets via a respective one of multiple flow channels. The flow channels may be at least partially provided in the tool body. The inlets may in particular be provided on the top side of the tool body.

The dry spot tool may comprise nozzles extending away from the top side of the tool body. Each one of the nozzles may have one of the inlets of the dry spot tool. The number of nozzles may correspond to the number of outlets. The number of nozzles may be two, three, four or more, for example. The nozzles may be spatially distributed with equal distance from one another on the dry spot tool. Also, or alternatively, the inlets and/or outlets may be spatially distributed with equal distance from one another on the dry spot tool. The individual flow channels may, in addition to being formed inside of the tool body, also be formed inside of the nozzles, thereby extending along the nozzles and the tool body. The nozzles may be made separate from the tool body and attached to the tool body. In particular, the nozzles may be made from a different material than the tool body. For example, the nozzles may be made from a flexible material, allowing flexibility for attaching the hoses of the vacuum system thereto. For example, rubber may be chosen as a flexible material. Alternatively, the nozzles may be monolithically or, in other words, integrally formed with the tool body.

The tool body may have a substantially circular, square or triangular shape, for example. The circular shape of the tool body preferably allows for a good distribution of the negative pressure generated by the vacuum system. When the opening has a circular shape as well, the dry spot may be provided as a circular dry spot. This may be preferred for certain applications. A circular-shaped tool body with a central opening having a circular shape results in a ring-shaped tool body. Alternatively, the opening of the tool body may have a square or triangular shape, which may correspond to the geometrical shape of the tool body. Thereby, different shapes of dry spots may be created depending on the particular requirement or later application of the dry spot of the composite part or component.

According to a second aspect of the invention, the object is solved by a dry spot arrangement comprising the dry spot tool according to the first aspect of the invention. The dry spot arrangement further comprises hoses and a vacuum system. The vacuum system is configured to be connected or is connected to the inlets of the dry spot tool via the hoses.

Each one of the inlets of the dry spot tool may be individually connected to the vacuum system via an individual one of the hoses, for example. It is possible that the individual hoses are connected with each other before being connected to the vacuum system. The vacuum system may in particular be a vacuum pump.

The dry spot arrangement may further comprise an additional vacuum system and a reservoir. The additional vacuum system may be decoupled from the vacuum system (connected to the dry spot tool) such that the vacuum systems may be operated with different negative pressures. The reservoir may comprise a liquid matrix material. In particular, each one of the vacuum systems may be an individual vacuum pump, which may be individually operated. Alternatively, the vacuum systems may be provided by means of a single vacuum pump but there may be a regulating device, such as a valve, enabling the vacuum pump to provide the vacuum systems with different negative pressures.

The additional vacuum system may be configured to be operated with a greater negative pressure than the vacuum system (connected to the dry spot tool). This ensures that the liquid matrix material may be evenly distributed along the entire reinforcement material outside of the dry spot tool without interruption from the vacuum generated by the vacuum system attached to the dry spot tool. In particular, it may be prevented that the vacuum system connected to the dry spot tool draws the liquid matrix material inside of the opening of the dry spot tool, where the dry spot shall be created.

The dry spot arrangement may further comprise a controlled leak system. The controlled leak system may have a suction structure configured to be placed or being placed inside of the opening. The suction structure may be a suction cup, for example. The leak or leakage provided at the opening of the dry spot tool ensures provision of the dry spot tool with a continuous negative pressure, thereby preventing the liquid matrix material from entering the area of the opening of the tool body during the resin transfer molding or, in other words, infusion process.

The controlled leak system may have a control device for controlling a leak flow of the dry spot arrangement passing through the suction structure. The control device allows for regulating the negative pressure inside of the dry spot tool. The control device may be a clamp, for example.

According to a third aspect of the invention, the object is solved by a method for manufacturing a composite part, in particular of a wind turbine, with a dry spot by means of vacuum assisted resin transfer molding using the dry spot arrangement of the second aspect of the invention. The method comprises the steps of:
- providing a mold;
- placing reinforcement material on the mold;
- placing the dry spot tool on the reinforcement material;
- sealing the dry spot tool and the reinforcement material by means of a seal cover;
- generating a negative pressure in a first space between the mold and the seal cover outside of the dry spot tool, thereby infusing the first space with the liquid matrix material; and
- generating a negative pressure in a second space between the mold and the seal cover inside of the dry spot tool, thereby creating the dry spot in the composite material manufactured by curing the infused liquid matrix material.

The manufacturing method may comprise further steps as generally known to the person skilled in the art to be applied in a vacuum assisted resin transfer molding. Such a further step may be placing a peel-ply (and distribution layer) on the reinforcement material, for example. Also, the method may comprise the step of sealing the seal cover, e.g., by means of a sealant tape. A further step may be to provide the additional vacuum system, in particular an additional vacuum pump, and fluidically attach it to the first space. Also, a further step may be to provide the reservoir with the liquid matrix material, in particular resin, and fluidically attach it to the first space. The negative pressure in the first space may be generated by operating the additional vacuum system. The curing of the liquid matrix material may be performed by waiting for a certain curing time.

The manufacturing method may moreover comprise further steps specifically designed for the dry spot creation as described herein. For example, the method may as a further step comprise providing the vacuum system, in particular a vacuum pump, and fluidically attaching it to the dry spot tool. The negative pressure in the second space may be generated by means of the vacuum system. The negative pressure in the second space may in particular be less than the negative pressure in the first space.

The method may further comprise providing the controlled leak system as previously described. The suction structure may be placed inside of the opening and attached to the reinforcement material. Accordingly, the dry spot tool and the reinforcement material may later together with the suction structure be sealed by means of the seal cover. The leakage flow of the dry spot arrangement passing through the suction structure may be controlled by means of the control device.

The method may further comprise the step of cutting a hole into the composite part in the area of the dry spot. The cutting of the hole in the dry spot area after the composite part has been manufactured is much easier than in the wet or infused area of the composite part. Also, the precision of the hole cutting may be increased. The hole may later serve for a function of the composite part. For example, in the case that the composite part is a rotor blade of a wind turbine, the hole or multiple holes cut into dry spot areas may serve as attachment points of lifting devices, introduction points of supply hoses of aerodynamic features placed on a blade surface of the rotor blades or for guiding lightning protection receptors from the blade surface therethrough.

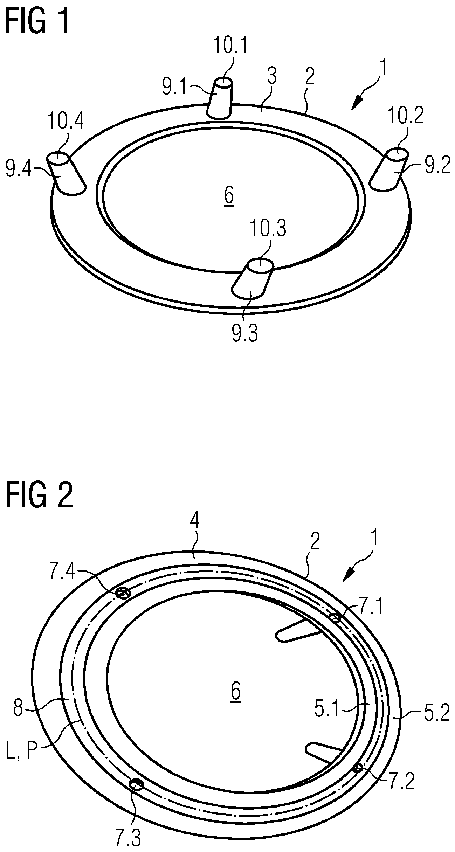

Further advantages, features and details of the invention unfold from the following description, in which by reference to drawings FIGS. 1 - 8, embodiments of the present invention are described in detail. Thereby, the features from the claims as well as the features mentioned in the description can be essential for the invention as taken alone or in an arbitrary combination. In the drawings, there is schematically shown:
- FIG. 1: a perspective view on a top side of a dry spot tool;
- FIG. 2: a perspective view on a bottom side of the dry spot tool from FIG. 1;
- FIG. 3: a perspective view on the dry spot tool of FIGS. 1 and 2 and a controlled leak system used during vacuum assisted resin transfer molding of a composite part;
- FIG. 4: a top view on a vacuum assisted resin transfer molding process including a dry spot arrangement having the dry spot tool of FIG. 3;
- FIG. 5: a side view on the vacuum assisted resin transfer molding process depicted in FIG. 4;
- FIG. 6: a schematic illustration of the steps of the vacuum assisted resin transfer molding process performed in FIGS. 4 and 5;
- FIG. 7: a top view on the composite part manufactured by means of the vacuum assisted resin transfer molding process depicted in FIGS. 4 - 6; and
- FIG. 8: a sectional view of the composite part of FIG. 7.

Same objects in FIGS. 1 - 8 are denominated with the same reference number. If there is more than one of the same type of object in any one of the FIGS. 1 - 8, the objects of the same type are denominated with the same reference number, whereby the objects are numbered in ascending order, the numbering being separated from the reference number by a dot. The objects are shown in a schematic manner and their specific dimensions are exemplary and may be enlarged for ease of reference only.

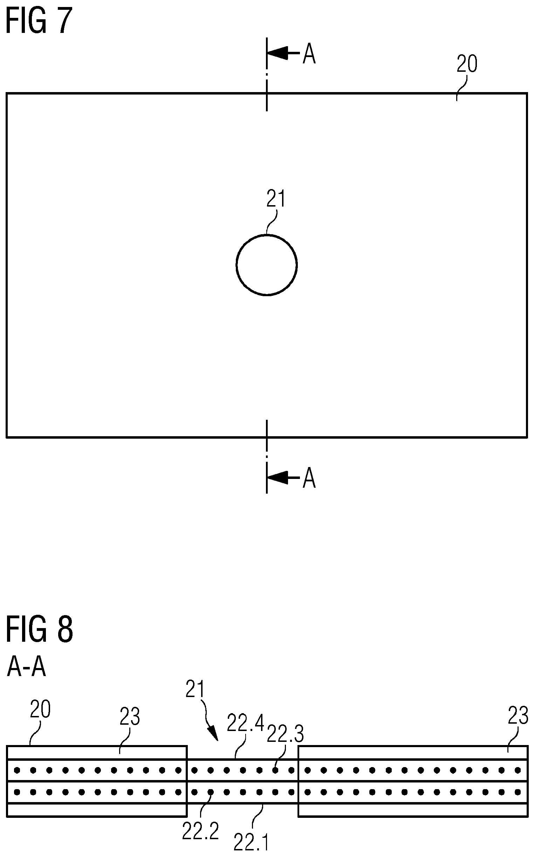

FIG. 1 shows a dry spot tool 1 having a tool body 2. The dry spot tool 1 is configured for creating a dry spot 21 in a composite part 20 (see FIG. 7) during a manufacturing process of the composite part 20 including vacuum assisted resin transfer molding.

The dry spot tool 1 has an opening 6 inside of it. In this example of a dry spot tool 1, the tool body 2 has a ring-shape surrounding the opening 6. However, the tool body 2 is not limited to this ring-shape or any other circular shape but may alternatively have a square shape, triangular shape or similar.

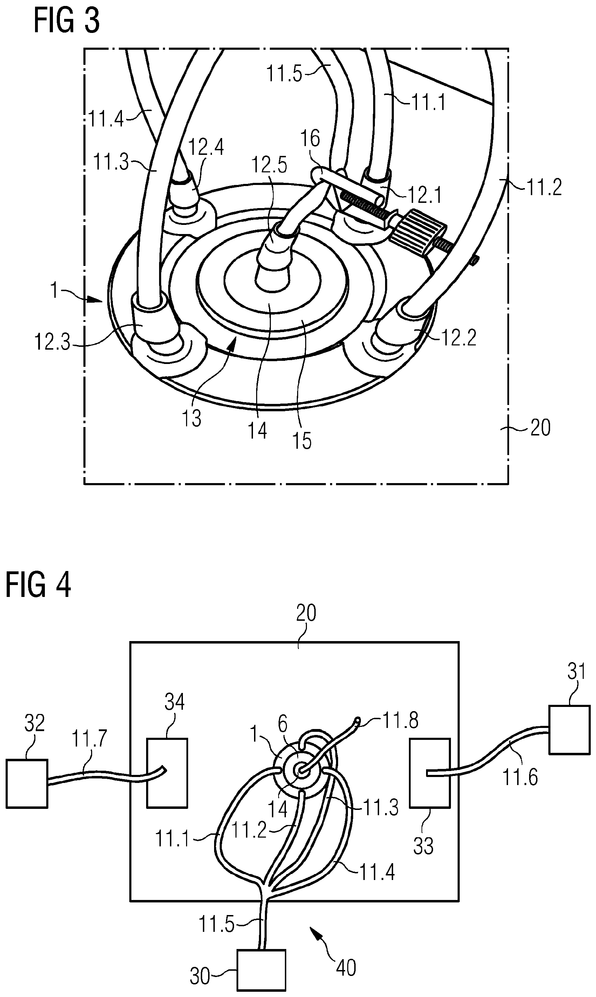

The dry spot tool 1 has a top side 3, which may be seen in FIG. 1. A number of nozzles 9.1, 9.2, 9.3, 9.4 are provided on the top side 3, which extend away from the top side 3. In this case, there are four nozzles 9.1, 9.2, 9.3, 9.4 as well as four outlets 7.1, 7.2, 7.3, 7.4 and inlets 10.1, 10.2, 10.3, 10.4 provided on the dry spot tool 1. At their ends, the nozzles 9.1, 9.2, 9.3, 9.4 are provided with inlets 10.1, 10.2, 10.3, 10.4. The nozzles 9.1, 9.2, 9.3, 9.4 enable a simple and air-tight connection of hoses 11.1, 11.2, 11.3, 11.4 (see FIG. 3) thereto.

The nozzles 9.1, 9.2, 9.3, 9.4 of the dry spot tool 1 shown in FIG. 1 are manufactured separately and later attached to the tool body 2. However, it is also possible to manufacture the tool body 2 with the nozzles 9.1, 9.2, 9.3, 9.4 or, in other words, the entire dry spot tool 1 from the same material and in one single manufacturing process, for example from a plastic and by means of additive manufacturing.

FIG. 2 shows the dry spot tool 1 with its bottom side 4, which is opposite of the top side 3. The dry spot tool 1 has a number of outlets 7.1, 7.2, 7.3, 7.4 equivalent to the number of nozzles 9.1, 9.2, 9.3, 9.4 or inlets 10.1, 10.2, 10.3, 10.4, which are fluidically connected with each other through respective flow channels extending inside of the tool body 2 and the nozzles 9.1, 9.2, 9.3, 9.4.

On the bottom side 4, the dry spot tool 1 further has a flow passage 8. In this exemplary case, the flow passage 8 extends with its entire length L along a perimeter P of the tool body 2. Further, the flow passage 8 extends in width or diameter from the outlets 7.1, 7.2, 7.3, 7.4 inside of the tool body 2 to the bottom side 4.

The flow passage 8 in this exemplary case follows the ring-shape of the tool body 2. The flow passage 8 is designed as a groove or cavity inside of the tool body 2 at its bottom side 4, and it is fluidically connected to each one of the outlets 7.1, 7.2, 7.3, 7.4. In other words, each one of the outlets 7.1, 7.2, 7.3, 7.4 fluidically connects with the other ones via the flow passage 8.

The flow passage 8 separates two bottom surfaces 5.1, 5.2 of the bottom side 4 from one another, the two bottom surfaces 5.1, 5.2 sharing the same plane. The flow passage 8 extends between the two bottom surfaces 5.1, 5.2 along the bottom side 4, such that the inner bottom surface 5.1 is adjacent the opening 6 and the outer bottom surface 5.2 is adjacent the outside of the tool body 2.

FIG. 3 shows the dry spot tool 1 of FIGS. 1 and 2 together with a controlled leak system 13 during the vacuum assisted resin transfer molding process. The dry spot tool 1 with its tool body 2 is placed on a layup of the composite part 20.

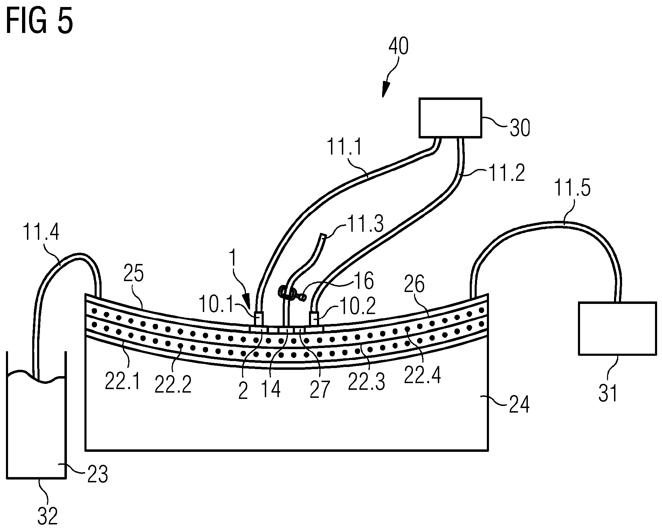

The layup of the composite part 20 comprise reinforcement material 22 (see FIG. 5), which may comprise multiple reinforcement material layers and be made from fibers or, in other words, the reinforcement material 22 may be a fibrous material having multiple layers stacked on top of one another. The reinforcement material 22 may comprise glass fibers, aramid fibers, carbon fibers and/or other fibers for reinforcing the composite part 20 to be manufactured.

Hoses 11.1, 11.2, 11.3, 11.4 are individually attached to the nozzles 9.1, 9.2, 9.3, 9.4 of the dry spot tool 1. Adhesive tapes 12.1, 12.2, 12.3, 12.4 assist in the sealing attachment of the hoses 11.1, 11.2, 11.3, 11.4 to the nozzles 9.1, 9.2, 9.3, 9.4.

A suction structure 14 of the controlled leak system 13, which in this exemplary case is a suction cup, has been placed on the layup of the composite part 20. The suction structure 14 is attached to a hose 11.5, to which a control device 16, which in this exemplary case is a clamp, is attached. An outer rim of the suction structure 14 is sealingly attached to the reinforcement material 22 of the composite part 20 by means of an adhesive 15.

FIG. 4 further shows that the hoses 11.1, 11.2, 11.3, 11.4 are connected to a vacuum system 30, which in this exemplary case is an individual vacuum pump 30, thereby forming a dry spot arrangement 40 including the dry spot tool 1.

The layup consisting of the components shown in FIG. 5 for manufacturing the composite part 20 is fluidically connected to a reservoir 32 containing a liquid matrix material 23 (see FIG. 5), in particular resin, via a further hose 11.7 and a matrix material inlet 34 on the layup of the composite part. A further or additional vacuum system 31, which in this exemplary case is designed as a further or additional vacuum pump 31, is connected via a further hose 11.6 and a matrix material outlet 33 to the layup of the composite part 20 to be manufactured.

In the example of FIG. 4, the dry spot tool 1 is arranged in the center of the composite part 20. However, the dry spot tool 1 may be arranged anywhere on the layup of the composite part 20. Also, it is possible to provide multiple dry spot tools 1 on the same layup of the composite part 20. The same vacuum system 30 may be used for all of these multiple dry spot tools 1.

Further, in the example of FIG. 4, only one matrix material inlet 34 and one matrix material outlet 33 are shown. However, there may be multiple matrix material inlets 34 and/or multiple matrix material outlets 33 distributed throughout the area of the layup of the composite part 20 to be manufactured, in particular at its sides. Thereby, an even infusion or, in other words, wetting of the reinforcement material 22 with the liquid matrix material 23 may be ensured throughout the reinforcement material 22, in particular around the area where the dry spot tool 1 is placed.

FIG. 5 shows the manufacturing setup according to FIG. 4 from another perspective. The layup of the composite part 20 to be manufactured consists of multiples layers of reinforcement material 22.1, 22.2, 22.3, 22.4 placed on top of one another on the mold 24. In this case, the fibers of the layers of reinforcement material 22.1, 22.2, 22.3, 22.4 are oriented in different directions as may be seen in FIG. 5. A peel-ply 26 is placed on top of the reinforcement material 22.1, 22.2, 22.3, 22.4.

The tool body 2 and the suction structure 13 are placed on top of the reinforcement material 22.1, 22.2, 22.3, 22.4 and the peel-ply 26. The tool body 2, the suction structure 13, the reinforcement material 22.1, 22.2, 22.3, 22.4 together with the peel ply 26 and the mold 24 underneath are then covered by a seal cover 25. In this exemplary case, the seal cover 25 is a vacuum bag. The vacuum bay may be made from a plastic material, in particular a transparent plastic material, for example.

After the tool body 2 and the suction structure 13 have been covered with the seal cover 25, they are connected by means of the hoses 11.1, 11.2 (only these are shown in FIG. 5 for the sake of simplicity) as shown in FIG. 4 to the vacuum system 30. Because the nozzles 9.1, 9.2, 9.3, 9.4 are fluidically connected to the flow passage 8 at the bottom side 4 of the tool body 2 and due to the controlled leak provided by the controlled leak system 13, the hoses 11.1, 11.2 of the vacuum system 30 are thereby connected to a second space between the seal cover 25 and the mold 24 inside of the opening 6 of the tool body 2.

When the vacuum system 30 is operated, it draws air from within the second space 27 constantly provided by means of the controlled leak system 13, and the tool body 2 is pressed against the mold 24. The reservoir 32 and additional vacuum system 31 are being operated in parallel and infuse the layup of the composite part 20 between the mold 24 and the seal cover 25 with the liquid matrix material 23 outside of the tool body 2. The additional vacuum system 31 is being operated with a greater negative pressure than the vacuum system 30 such that the liquid matrix material 23 is distributed throughout the area of the layup of the composite part 20 outside of the tool body 2 rather than inside of the opening 6. The negative pressure from the vacuum system 30 presses the tool body 2 firmly against the layup of the composite part 20 and mold 24 at its position and through the constantly provided negative pressure prevents liquid matrix material 23 from entering the second space 27 inside of the opening 6.

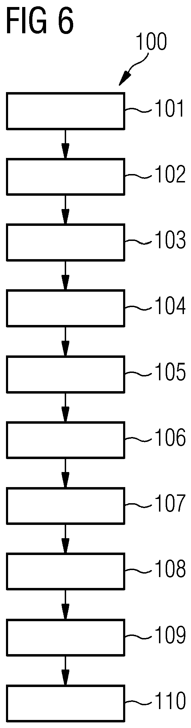

FIG. 6 schematically depicts the steps 101 - 110 of the method 100 for manufacturing the composite part 20 with the dry spot by means of the vacuum assisted resin transfer molding using the dry spot arrangement 40 from FIGS. 4 and 5 and as previously explained.

In step 101 of method 100, the mold 24 is provided. The mold 24 is provided with a shape that corresponds to the shape of the composite part 20 that is to be manufactured. In this case, the composite part 20 may be a rotor blade for a wind turbine or part thereof. As may be seen in FIG. 5, the mold 24 has a curved shape corresponding to a curvature of a rotor blade.

In step 102 of method 100, the reinforcement material 22.1, 22.2, 22.3, 22.4 is placed on the mold 24 in the desired number of layers and fiber orientation.

In step 103 of method 100, the peel-ply 26 is placed on top of the already placed reinforcement material 22.1, 22.2, 22.3, 22.4. The peel-ply 26 enables uniform infusion of the layup with the liquid matrix material 23 and simple removal of the seal cover 25 attached to the layup of the composite material 20 after curing the infused layup to get the composite material 20.

In step 104 of method 100, the dry spot tool 1 and the controlled leak system 13 are provided on the peel-ply 26 as previously explained with reference to FIG. 5.

In step 105 of method 100, the seal cover 25 is placed on top of the entirety of the layup of the composite part 20 to be manufactured including the dry spot tool 1 and the suction structure 13 in the opening 6.

In step 106 of method 100, the hoses 11.1, 11.2 connected to the vacuum system 30 are connected through or, in other words, penetrating the seal cover 25 to the nozzles 9 of the dry spot tool 1. Similarly, the hose 11.3 is being connected to the suction structure 14, and the hoses 11.4, 11.5 of the reservoir 32 and the additional vacuum system 31 are connected via the matrix material inlet 32 and matrix material outlet 31 (see FIG. 4) to the first space 26 inside of the layup of the composite part 20 to be manufactured.

In step 107 of method 100, both vacuum systems 30, 31 are operated such that the layup of the composite part 20 outside of the tool body 20 is infused with the resin from the reservoir 32 during the vacuum assisted resin transfer molding executed thereby, while the layup of the composite part 20 at the position of the opening 6 remains dry, such that the dry spot 21 shown in FIG. 7 is formed in the composite part 20 that is thereby manufactured.

In step 108 of method 100, the vacuum systems 30, 31 are turned off and the liquid matrix material 23 inside of the layup of the composite part 20 is allowed to cure for a predetermined time period.

In step 109 of method 100, the seal cover 25 together with the peel-ply 26, the dry spot tool 1 and the suction structure 14 are removed from the manufactured composite part 20 consisting of the reinforcement material 22.1, 22.2, 22.3, 22.4 and the cured matrix material 23. The composite part 20 is also removed from the mold 24.

In optional step 110 of method 100, a hole is cut in the composite part 20 in the area of the dry spot 21 seen in FIG. 7. In a possible further step, the hole may serve for a function of the composite part 20, which in this case is a rotor blade of a wind turbine. For example, an attachment of a lifting device via the hole, guiding supply hoses of aerodynamic features placed on a blade surface of the rotor blade through the hole or guiding a lightning protection receptor from the blade surface through the hole are some possible further steps of application involving the hole cut in the area of the dry spot 21.

FIG. 8 shows the cross-sectional cut along line A-A of FIG. 7. The manufactured composite part 20 is seen with the cured portions having the cured matrix material 23 embedding the reinforcement material 22.1, 22.2, 22.3, 22.4 therein and a portion in between, which is the dry spot 21. The dry spot 21 has the reinforcement material 22.1, 22.2, 22.3, 22.4 but not the matrix material 23 embedding the fibers of the reinforcement material 22.1, 22.2, 22.3, 22.4 therein.

## Claims

1. Dry spot tool (1) for creating a dry spot (21) in a composite part (20) of a wind turbine during vacuum assisted resin transfer molding, whereby the dry spot tool (1) has a tool body (2) comprising:
- a perimeter (P), the tool body (2) extending along the perimeter (2) and having an opening (6) in the center of the perimeter (2) for creating the dry spot (21) in an area of the opening (6);
- a top side (3) and a bottom side (4), the top side (3) being opposite of the bottom side (4) and the bottom side (4) having at least one bottom surface (5);
- outlets (7), the outlets (7) being fluidically connected to inlets (10) of the dry spot tool (1), the inlets (10) being configured for connecting hoses (11) of a vacuum system (30) thereto; and
- a flow passage (8), the flow passage (8) fluidically connecting the outlets (7) with one another, extending at least for a partial length (L) thereof along the perimeter (P) of the tool body (2) and extending at least for a partial length (L) thereof in width from the outlets (7) to the bottom side (4).

2. Dry spot tool (1) according to claim 1, whereby the flow passage (8) substantially extends along the entire perimeter (P) of the tool body (2).

3. Dry spot tool (1) according to claim 1 or 2, whereby the flow passage (8) extends substantially along its entire length (L) in width from the outlets (7) to the bottom side (4).

4. Dry spot tool (1) according to any of the previous claims, whereby the flow passage (8) extends from an inside of the tool body (2), in which the outlets (7) are located, to the bottom side (4).

5. Dry spot tool (1) according to any of the previous claims, whereby the bottom side (4) has two bottom surfaces (5) separated from one another by means of the flow passage (8) located in between the two bottom surfaces (5).

6. Dry spot tool (1) according to any of the previous claims, whereby each one of the inlets (10) is respectively fluidically connected to one of the outlets (7) via a respective one of multiple flow channels.

7. Dry spot tool (1) according to any of the previous claims, whereby the dry spot tool (1) comprises nozzles (9) extending away from the top side (3) of the tool body (2), each one of the nozzles (9) having one of the inlets (10) of the dry spot tool (1).

8. Dry spot tool (1) according to any of the previous claims, whereby the tool body (2) has a substantially circular, square or triangular shape.

9. Dry spot arrangement (40) comprising the dry spot tool (1) according to any of the previous claims, hoses (11) and a vacuum system (30), the vacuum system (30) being configured to be connected or being connected to the inlets (10) of the dry spot tool (1) via the hoses (11).

10. Dry spot arrangement (40) according to claim 9, whereby the dry spot arrangement (40) further comprises an additional vacuum system (31) and a reservoir (32), the additional vacuum system (31) being decoupled from the vacuum system (30) such that the vacuum systems (30, 31) may be operated with different negative pressures and the reservoir (32) comprising a liquid matrix material (23).

11. Dry spot arrangement (40) according to claim 10, whereby the additional vacuum system (31) is configured to be operated with a greater negative pressure than the vacuum system (30).

12. Dry spot arrangement (40) according to any of claims 9 - 11, whereby the dry spot arrangement (40) further comprises a controlled leak system (13), the controlled leak system (13) having a suction structure (14) being configured to be placed or being placed inside of the opening (6).

13. Dry spot arrangement (40) according to claim 12, whereby the controlled leak system (13) comprises a control device (16) for controlling a leak flow of the dry spot arrangement (40) passing through the suction structure (14).

14. Method (100) for manufacturing a composite part (20) with a dry spot (21) by means of vacuum assisted resin transfer molding using the dry spot arrangement (40) according to any of claims 10 - 13, whereby the method (100) comprises the steps of:
- providing a mold (24);
- placing reinforcement material (22) on the mold (24);
- placing the dry spot tool (1) on the reinforcement material (22);
- sealing the dry spot tool (1) and the reinforcement material (22) by means of a seal cover (25);
- generating a negative pressure in a first space (26) between the mold (24) and the seal cover (25) outside of the dry spot tool (1), thereby infusing the first space (26) with the liquid matrix material (23); and
- generating a negative pressure in a second space (27) between the mold (24) and the seal cover (25) inside of the dry spot tool (1), thereby creating the dry spot (21) in the composite material (20) manufactured by curing the infused liquid matrix material (23).

15. Method (100) according to claim 14, whereby the method (100) further comprises the step of cutting a hole into the composite part (20) in the area of the dry spot (21).

## Patentansprüche

1. Trockenstellenwerkzeug (1) zum Erzeugen einer trockenen Stelle (21) in einem Verbundteil (20) einer Windturbine während des vakuumunterstützten Resin Transfer Molding, wobei das Trockenstellenwerkzeug (1) einen Werkzeugkörper (2) aufweist, der Folgendes umfasst:
- einen Umfang (P), wobei sich der Werkzeugkörper (2) entlang des Umfangs (2) erstreckt und eine Öffnung (6) in der Mitte des Umfangs (2) zum Erzeugen der trockenen Stelle (21) in einem Bereich der Öffnung (6) aufweist;
- eine Oberseite (3) und eine Unterseite (4), wobei die Oberseite (3) der Unterseite (4) gegenüberliegt und die Unterseite (4) mindestens eine untere Oberfläche (5) aufweist;
- Auslässe (7), wobei die Auslässe (7) fluidisch mit Einlässen (10) des Trockenstellenwerkzeugs (1) verbunden sind und die Einlässe (10) dazu konfiguriert sind, Schläuche (11) eines Vakuumsystems (30) damit zu verbinden; und
- einen Strömungskanal (8), wobei der Strömungskanal (8) die Auslässe (7) fluidisch miteinander verbindet, sich mindestens für eine Teillänge (L) dessen entlang des Umfangs (P) des Werkzeugkörpers (2) erstreckt und sich mindestens für eine Teillänge (L) dessen in einer Breite von den Auslässen (7) zu der Unterseite (4) erstreckt.

2. Trockenstellenwerkzeug (1) nach Anspruch 1, wobei sich der Strömungskanal (8) im Wesentlichen entlang des gesamten Umfangs (P) des Werkzeugkörpers (2) erstreckt.

3. Trockenstellenwerkzeug (1) nach Anspruch 1 oder 2, wobei sich der Strömungskanal (8) im Wesentlichen entlang seiner gesamten Länge (L) in einer Breite von den Auslässen (7) zu der Unterseite (4) erstreckt.

4. Trockenstellenwerkzeug (1) nach einem der vorhergehenden Ansprüche, wobei sich der Strömungskanal (8) von einer Innenseite des Werkzeugkörpers (2), in dem sich die Auslässe (7) befinden, zu der Unterseite (4) erstreckt.

5. Trockenstellenwerkzeug (1) nach einem der vorhergehenden Ansprüche, wobei die Unterseite (4) zwei untere Oberflächen (5) aufweist, die mittels des Strömungskanales (8), der sich zwischen den zwei unteren Oberflächen (5) befindet, voneinander getrennt sind.

6. Trockenstellenwerkzeug (1) nach einem der vorhergehenden Ansprüche, wobei jeder der Einlässe (10) jeweils über eine jeweilige von mehreren Strömungsrinnen fluidisch mit einem der Auslässe (7) verbunden ist.

7. Trockenstellenwerkzeug (1) nach einem der vorhergehenden Ansprüche, wobei das Trockenstellenwerkzeug (1) Düsen (9) umfasst, die sich von der Oberseite (3) des Werkzeugkörpers (2) weg erstrecken, wobei jede der Düsen (9) einen der Einlässe (10) des Trockenstellenwerkzeugs (1) aufweist.

8. Trockenstellenwerkzeug (1) nach einem der vorhergehenden Ansprüche, wobei der Werkzeugkörper (2) eine im Wesentlichen runde, quadratische oder dreieckige Form aufweist.

9. Trockenstellenanordnung (40), umfassend das Trockenstellenwerkzeug (1) nach einem der vorhergehenden Ansprüche, Schläuche (11) und ein Vakuumsystem (30), wobei das Vakuumsystem (30) dazu konfiguriert ist, über die Schläuche (11) mit den Einlässen (10) des Trockenstellenwerkzeugs (1) verbunden zu sein, oder es damit verbunden ist.

10. Trockenstellenanordnung (40) nach Anspruch 9, wobei die Trockenstellenanordnung (40) ferner ein zusätzliches Vakuumsystem (31) und einen Behälter (32) umfasst, wobei das zusätzliche Vakuumsystem (31) derart von dem Vakuumsystem (30) entkoppelt ist, dass die Vakuumsysteme (30, 31) mit unterschiedlichen Unterdrücken betrieben werden können, und der Behälter (32) ein flüssiges Matrixmaterial (23) umfasst.

11. Trockenstellenanordnung (40) nach Anspruch 10, wobei das zusätzliche Vakuumsystem (31) dazu konfiguriert ist, mit einem höheren Unterdruck als das Vakuumsystem (30) betrieben zu werden.

12. Trockenstellenanordnung (40) nach einem der Ansprüche 9-11, wobei die Trockenstellenanordnung (40) ferner ein System (13) für gesteuerte Lecks umfasst, wobei das System (13) für gesteuerte Lecks eine Saugstruktur (14) aufweist, die dazu konfiguriert ist, innerhalb der Öffnung (6) platziert zu werden, oder die dort platziert ist.

13. Trockenstellenanordnung (40) nach Anspruch 12, wobei das System (13) für gesteuerte Lecks eine Steuervorrichtung (16) zum Steuern eines Leckstroms der Trockenstellenanordnung (40), der durch die Saugstruktur (14) verläuft, umfasst.

14. Verfahren (100) zum Herstellen eines Verbundteils (20) mit einer trockenen Stelle (21) mittels vakuumunterstütztem Resin Transfer Molding unter Verwendung der Trockenstellenanordnung (40) nach einem der Ansprüche 10-13, wobei das Verfahren (100) die folgenden Schritte umfasst:
- Bereitstellen einer Form (24);
- Platzieren von Verstärkungsmaterial (22) auf der Form (24);
- Platzieren des Trockenstellenwerkzeugs (1) auf dem Verstärkungsmaterial (22);
- Abdichten des Trockenstellenwerkzeugs (1) und des Verstärkungsmaterials (22) mittels einer Dichtungsabdeckung (25);
- Erzeugen eines Unterdrucks in einem ersten Raum (26) zwischen der Form (24) und der Dichtungsabdeckung (25) außerhalb des Trockenstellenwerkzeugs (1), wodurch der erste Raum (26) mit dem flüssigen Matrixmaterial (23) aufgefüllt wird; und
- Erzeugen eines Unterdrucks in einem zweiten Raum (27) zwischen der Form (24) und der Dichtungsabdeckung (25) innerhalb des Trockenstellenwerkzeugs (1), wodurch die trockene Stelle (21) in dem Verbundmaterial (20) erzeugt wird, das durch Härten des aufgefüllten flüssigen Matrixmaterials (23) hergestellt wird.

15. Verfahren (100) nach Anspruch 14, wobei das Verfahren (100) ferner den Schritt des Schneidens eines Lochs in das Verbundteil (20) in dem Bereich der trockenen Stelle (21) umfasst.

## Revendications

1. Outil de zone sèche (1) pour créer une zone sèche (21) dans une pièce composite (20) d'une éolienne lors du moulage par transfert de résine assisté par le vide, l'outil de zone sèche (1) comportant un corps d'outil (2) comprenant :
- un périmètre (P), le corps d'outil (2) s'étendant le long du périmètre (2) et ayant une ouverture (6) au centre du périmètre (2) pour créer la zone sèche (21) dans une zone de l'ouverture (6) ;
- un côté supérieur (3) et un côté inférieur (4), le côté supérieur (3) étant opposé au côté inférieur (4) et le côté inférieur (4) ayant au moins une surface inférieure (5) ;
- des sorties (7), les sorties (7) étant reliées fluidiquement à des entrées (10) de l'outil de zone sèche (1), les entrées (10) étant configurées pour y raccorder des tuyaux flexibles (11) d'un système de vide (30) ; et
- un passage d'écoulement (8), le passage d'écoulement (8) reliant fluidiquement les sorties (7) entre elles, s'étendant au moins sur une longueur partielle (L) de celui-ci le long du périmètre (P) du corps d'outil (2) et s'étendant au moins sur une longueur partielle (L) de celui-ci en largeur des sorties (7) au côté inférieur (4).

2. Outil de zone sèche (1) selon la revendication 1, dans lequel le passage d'écoulement (8) s'étend sensiblement le long de tout le périmètre (P) du corps d'outil (2).

3. Outil de zone sèche (1) selon la revendication 1 ou 2, dans lequel le passage d'écoulement (8) s'étend sensiblement sur toute sa longueur (L) en largeur depuis les sorties (7) jusqu'au côté inférieur (4).

4. Outil de zone sèche (1) selon l'une quelconque des revendications précédentes, dans lequel le passage d'écoulement (8) s'étend depuis un intérieur du corps d'outil (2), dans lequel les sorties (7) sont situées, jusqu'au côté inférieur (4).

5. Outil de zone sèche (1) selon l'une quelconque des revendications précédentes, dans lequel le côté inférieur (4) a deux surfaces inférieures (5) séparées l'une de l'autre au moyen du passage d'écoulement (8) situé entre les deux surfaces inférieures (5).

6. Outil de zone sèche (1) selon l'une quelconque des revendications précédentes, dans lequel chacune des entrées (10) est respectivement raccordée fluidiquement à l'une des sorties (7) par l'intermédiaire d'un canal respectif parmi de multiples canaux d'écoulement.

7. Outil de zone sèche (1) selon l'une quelconque des revendications précédentes, dans lequel l'outil de zone sèche (1) comprend des buses (9) s'étendant à distance du côté supérieur (3) du corps d'outil (2), chacune des buses (9) ayant l'une des entrées (10) de l'outil de zone sèche (1).

8. Outil de zone sèche (1) selon l'une quelconque des revendications précédentes, dans lequel le corps d'outil (2) a une forme sensiblement circulaire, carrée ou triangulaire.

9. Agencement de zone sèche (40) comprenant l'outil de zone sèche (1) selon l'une quelconque des revendications précédentes, des tuyaux flexibles (11) et un système de vide (30), le système de vide (30) étant configuré pour être connecté ou étant connecté aux entrées (10) de l'outil de zone sèche (1) via les tuyaux flexibles (11).

10. Agencement de zone sèche (40) selon la revendication 9, dans lequel l'agencement de zone sèche (40) comprend en outre un système de vide supplémentaire (31) et un réservoir (32), le système de vide supplémentaire (31) étant découplé du système de vide (30) de sorte que les systèmes de vide (30, 31) peuvent fonctionner avec différentes pressions négatives et le réservoir (32) comprenant un matériau de matrice liquide (23).

11. Agencement de zone sèche (40) selon la revendication 10, dans lequel le système de vide supplémentaire (31) est configuré pour être activé avec une pression négative plus grande que le système de vide (30).

12. Agencement de zone sèche (40) selon l'une quelconque des revendications 9 à 11, dans lequel l'agencement de zone sèche (40) comprend en outre un système de fuite contrôlée (13), le système de fuite contrôlée (13) ayant une structure d'aspiration (14) configurée pour être placée ou étant placée à l'intérieur de l'ouverture (6).

13. Agencement de zone sèche (40) selon la revendication 12, dans lequel le système de fuite contrôlée (13) comprend une soupape de commande (16) pour commander un écoulement de fuite de l'agencement de zone sèche (40) passant à travers la structure d'aspiration (14).

14. Procédé (100) de fabrication d'une pièce composite (20) avec un zone sèche (21) au moyen d'un moulage par transfert de résine assisté par vide en utilisant l'agencement de zone sèche (40) selon l'une quelconque des revendications 10 à 13, le procédé (100) comprenant les étapes consistant à :
- fournir un moule (24) ;
- placer un matériau de renforcement (22) sur le moule (24) ;
- placer l'outil de zone sèche (1) sur le matériau de renforcement (22) ;
- sceller l'outil de zone sèche (1) et le matelas de renforcement (22) au moyen d'un couvercle de joint d'étanchéité (25) ;
- générer une pression négative dans un premier espace (26) de torsion du moule (24) et du couvercle de joint d'étanchéité (25) à l'extérieur de l'outil de zone sèche (1), perfusant ainsi le premier espace (26) avec le matériau de matrice liquide (23) ; et
- générer une pression négative dans un second espace (27) entre le moule (24) et le couvercle de joint d'étanchéité (25) à l'intérieur de l'outil de zone sèche (1), créant ainsi la zone sèche (21) dans le matériau de composite (20) fabriqué en durcissant le matériau de matrice liquide (23) perfusé.

15. Procédé (100) selon la revendication 14, dans lequel le procédé (100) comprend en outre l'étape de découpe d'un trou dans la pièce composite (20) dans la zone de la zone sèche (21).
